# EUROPEAN PATENT APPLICATION

(11) **EP 4 247 025 A1**
(43) Date of publication of application: **20.09.2023**
(21) Application number: 21909431.5
(22) Date of filing: 22.12.2021
(51) Int. Cl.: H04W 8/14, H04W 8/20, H04W 24/02

(54) **METHOD FOR CONTROLLING SECONDARY CELL GROUP, TERMINAL, AND NETWORK SIDE DEVICE**

(30) Priority: 25.12.2020 CN 202011568751
(71) Applicant: Vivo Mobile Communication Co., Ltd., Dongguan, Guangdong 523863 (CN)
(72) Inventor: LIU, Xuanbing, Dongguan, Guangdong 523863 (CN); YANG, Xiaodong, Dongguan, Guangdong 523863 (CN)
(74) Representative: Murgitroyd & Company
(86) International application number: PCT/CN2021/140292
(87) International publication number: WO 2022/135435

(57) **Abstract**

This application discloses a method for controlling a secondary cell group, a terminal, and a network-side device, belonging to the field of wireless communication technologies. The method includes: sending, by a terminal, first indication information, and/or sending second indication information, where the first indication information is used for indicating SCG suspend to a network-side device, and the second indication information is used for indicating SCG resume to the network-side device.

## Description

### CROSS-REFERENCE TO RELATED APPLICATION

The present invention claims priority to Chinese Patent Application No. 202011568751.5, filed in China on December 25, 2020 and entitled "METHOD FOR CONTROLLING SECONDARY CELL GROUP, TERMINAL, AND NETWORK-SIDE DEVICE", which is incorporated herein by reference in its entirety.

### TECHNICAL FIELD

This application belongs to the field of wireless communication technologies, and specifically, to a method for controlling a secondary cell group, a terminal, and a network-side device.

### BACKGROUND

In the fifth generation (5 Generation, 5G) mobile communication system, user equipment (User Equipment, UE, that is, a terminal) may use a dual connectivity (Dual Connectivity, DC) architecture. The DC architecture may provide the UE with resources of two network nodes (access network elements). One network node is referred to as a master node (Master node, MN), and the other network node is referred to as a secondary node (Secondary node, SN). For each network node, a carrier aggregation technology (Carrier Aggregation, CA) may be used to configure a series of serving cells controlled by the network node for the UE, which is also referred to as a cell group (cell group). A cell group controlled by the MN is referred to as a master cell group (Master Cell Group, MCG), and a cell group controlled by the SN is referred to as a secondary cell group (Secondary Cell Group, SCG).

In some scenarios, the UE needs to suspend an SCG connection to perform other tasks. For example, for a multi-subscriber identity module (SIM) terminal that supports multi-RAT dual connectivity (Multi-RAT Dual Connectivity, MR-DC), the UE may need to suspend the SCG connection (secondary cell group) so that the terminal may perform other card tasks. However, in an SCG suspend solution provided in the related art, there are problems of low triggering efficiency and a large latency of an SCG suspend procedure.

### SUMMARY

Embodiments of this application provide a method for controlling a secondary cell group, a terminal, and a network-side device, which may resolve problems of low triggering efficiency and a large latency of an SCG suspend procedure existing when an SCG is suspended.

According to a first aspect, a method for controlling a secondary cell group is provided, performed by a terminal, and the method including: sending first indication information, and/or, sending second indication information, where the first indication information is used for indicating SCG suspend to a network-side device, and the second indication information is used for indicating SCG resume to the network-side device.

According to a second aspect, a method for controlling a secondary cell group is provided, performed by a network-side device, and the method including: receiving first indication information, and/or receiving second indication information, where the first indication information is used for indicating SCG suspend to a network-side device, and the second indication information is used for indicating SCG resume to the network-side device.

According to a third aspect, an apparatus for controlling a secondary cell group is provided, including: a sending module, configured to send first indication information, and/or send second indication information, where the first indication information is used for indicating SCG suspend to a network-side device, and the second indication information is used for indicating SCG resume to the network-side device.

According to a fourth aspect, an apparatus for controlling a secondary cell group is provided, including: a second receiving module, configured to receive first indication information, and/or receive second indication information, where the first indication information is used for indicating SCG suspend to a network-side device, and the second indication information is used for indicating SCG resume to the network-side device.

According to a fifth aspect, a terminal is provided, including a processor, a memory, and a program or an instruction stored in the memory and executable on the processor, where when the program or instruction is executed by the processor, the steps of the method according to the first aspect are implemented.

According to a sixth aspect, a network-side device is provided, where the network-side device includes a processor, a memory, and a program or an instruction stored in the memory and executable on the processor, where when the program or instruction is executed by the processor, the steps of the method in the second aspect are implemented.

According to a seventh aspect, a readable storage medium is provided, storing a program or an instruction, where when the program or instruction is executed by a processor, the steps of the method according to the first aspect are implemented, or the steps of the method according to the second aspect are implemented.

According to an eighth aspect, a chip is provided, including a processor and a communication interface, where the communication interface is coupled to the processor, and the processor is configured to execute a program or an instruction on a network-side device to implement the method according to the first aspect, or implement the method according to the second aspect.

According to a ninth aspect, a computer program product is provided, including a processor, a memory, and a program or an instruction stored in the memory and executable on the processor, where when the program or instruction is executed by the processor, the steps of the method according to the first aspect are implemented, or the method according to the second aspect are implemented.

In the embodiments of this application, the terminal indicates the SCG suspend and/or resume to the network-side device by sending the first indication information and/or the second indication information. Therefore, the efficient triggering of the SCG suspend procedure and/or the SCG resume procedure may be effectively implemented, and the latency of the SCG suspend procedure and/or the SCG resume procedure may be reduced.

### BRIEF DESCRIPTION OF THE DRAWINGS

FIG. 1 is a schematic diagram of a wireless communication system according to an exemplary embodiment of this application.
FIG. 2 is a schematic flowchart of a method for controlling a secondary cell group according to an exemplary embodiment of this application.
FIG. 3 is a schematic flowchart of a method for controlling a secondary cell group according to another exemplary embodiment of this application.
FIG. 4a is a schematic diagram of an interaction flow of a method for controlling a secondary cell group according to an exemplary embodiment of this application.
FIG. 4b is a schematic diagram of an interaction flow of a method for controlling a secondary cell group according to another exemplary embodiment of this application.
FIG. 5 is a schematic flowchart of a method for controlling a secondary cell group according to an exemplary embodiment of this application.
FIG. 6a is a schematic block diagram of an apparatus for controlling a secondary cell group according to an exemplary embodiment of this application.
FIG. 6b is a schematic block diagram of an apparatus for controlling a secondary cell group according to another embodiment of this application.
FIG. 7a is a schematic block diagram of an apparatus for controlling a secondary cell group according to yet another embodiment of this application.
FIG. 7b is a schematic block diagram of an apparatus for controlling a secondary cell group according to still another exemplary embodiment of this application.
FIG. 8 is a schematic block diagram of a terminal according to an exemplary embodiment of this application.
FIG. 9 is a schematic block diagram of a network-side device according to an exemplary embodiment of this application.

### DETAILED DESCRIPTION

The technical solutions in embodiments of this application are clearly and completely described below with reference to the accompanying drawings in the embodiments of this application. Apparently, the described embodiments are merely some rather than all of the embodiments of this application. All other embodiments obtained by a person of ordinary skill in the art based on the embodiments of this application shall fall within the protection scope of this application.

In the specification and claims of this application, terms "first" and "second" are used to distinguish similar objects, but are not used to describe a specific sequence or order. It may be understood that the data used in such a way is interchangeable in proper circumstances, so that the embodiments of this application can be implemented in other sequences than the sequence illustrated or described herein. In addition, objects distinguished by "first" and "second" are usually of a type, and the quantity of objects is not limited. For example, a first object may be one or more than one. In addition, in the specification and claims, "and/or" means at least one of the connected objects, and the character "/" generally indicates an "or" relation between associated objects.

It should be noted that, the technology described in this embodiment of this application is not limited to a long term evolution (Long Term Evolution, LTE)/LTE evolution (LTE-Advanced, LTE-A) system, but may further be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access, (Orthogonal Frequency Division Multiple Access, OFDMA), single-carrier frequency-division multiple access (Single-carrier Frequency-Division Multiple Access, SC-FDMA), and other systems. The terms "system" and "network" in this embodiment of this application are often used interchangeably, and the described technologies may be used both for the systems and radio technologies mentioned above and may also be used for other systems and radio technologies. However, the following descriptions describe a new radio (New Radio, NR) system for the objective of being used as an example, and NR terms are used in most of the descriptions below. These technologies may also be applied to applications other than NR system applications, such as a 6-th generation (6-th Generation, 6G) communication system.

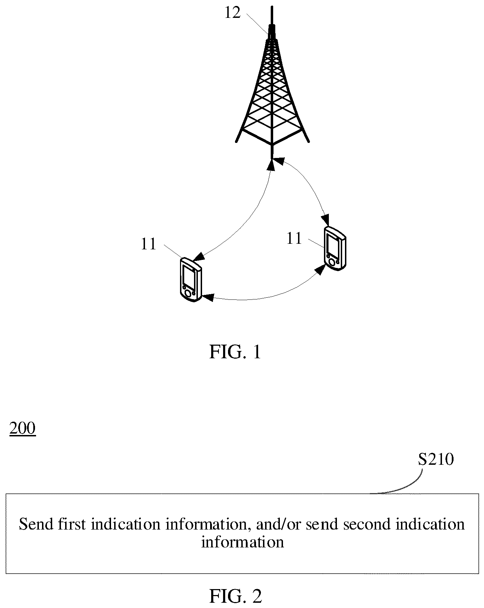

FIG. 1 is a block diagram of a wireless communication system to which an embodiment of this application may be applied. The wireless communication system includes a terminal 11 and a network-side device 12. The terminal 11 may also be referred to as a terminal device or user equipment (User Equipment, UE). The terminal 11 may be a terminal-side device such as a mobile phone, a tablet personal computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), or vehicle user equipment (VUE), and pedestrian user equipment, (PUE). The wearable device includes: a bracelet, headphones, glasses, or the like. It is to be noted that, in the embodiments of this application, a specific type of the terminal 11 is not limited. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolution NodeB (eNB), a household NodeB, a household evolution NodeB, a WLAN access point, a WiFi node, a transmission and reception point (Transmission and Reception Point, TRP), or some other proper terms in the field. Provided that the same technical effect is achieved, the base station is not limited to a specific technical vocabulary. It should be noted that in this embodiment of this application, only a base station in the NR system is used as an example, but a specific type of the base station is not limited.

A technical solution provided in the embodiments of this application is described in detail below by using specific embodiments and application scenarios with reference to the accompanying drawings.

As shown in FIG. 2, FIG. 2 is a schematic flowchart of a method 200 for controlling a secondary cell group according to an embodiment of this application. The method 200 may be performed by a terminal, for example, may be performed by software and/or hardware installed in the terminal. The method 200 at least may include the following steps.

S210. Send first indication information, and/or send second indication information.

In this embodiment, the terminal may be in a dual connectivity mode, for example, the terminal has established an SCG connection, or the terminal is in an SCG connection period, or the SCG has an MR-DC capability, or the like. When the terminal determines that SCG suspend or resume needs to be performed, the terminal may indicate MCG suspend or resume to the network-side device, such as sending the first indication information or the second indication information.

The first indication information is used for indicating SCG suspend (Suspend) to the network-side device. That is, the terminal initiates or triggers an SCG suspend procedure as required. In a possible implementation, the SCG suspend may include but not limited to states or behaviors shown in at least one of the following (1) to (7).
(1) Disable the SCG.
(2) Suspend a dual connectivity capability (SCG or MR-DC Capability Suspend).
(3) Disable a dual connectivity capability.
   In the foregoing (1) to (3), the terminal may temporarily not support the dual connectivity capability by disabling the SCG, suspending the dual connectivity capability, or disabling the dual connectivity capability.
(4) Suspend an SCG resource (SCG Resource Suspend).
(5) Disable an SCG resource.
   In the foregoing (4) to (5), the terminal may suspend the SCG resource by suspending or disabling the SCG resource.
(6) Deactivate (inactive) an SCG connection.
(7) Release (release) an SCG connection.

Corresponding to the first indication information, the second indication information may be used for indicating the SCG resume to the network-side device (that is, release the SCG from a suspended state). In a possible implementation, the SCG resume may include but not limited to states or behaviors shown in at least one of the following (1) to (7).
(1) Enable the SCG resume.
(2) Resume a dual connectivity capability.
(3) Enable a dual connectivity capability.
   In the foregoing (1) to (3), the terminal may support the dual connectivity capability by enabling the SCG, resuming the dual connectivity capability, or enabling the dual connectivity capability.
(4) Resume an SCG resource.
(5) Enable an SCG resource.
   In the foregoing (4) to (5), the SCG resource may be resumed by resuming or enabling the SCG resource.
(6) Activate an SCG connection.
(7) Resume an SCG connection.

In an implementation, the network-side device may be the MN or the SN, and the first indication information and the second indication information may be transmitted through signaling such as a medium access control element (Medium Access Control-Control Element, MAC CE), radio resource control (Radio Resource Control, RRC), or the like, which is not limited herein.

It is to be noted that both the SCG suspend procedure and the SCG resume procedure may be triggered by the terminal, or only the SCG suspend procedure may be triggered by the terminal, or only the SCG resume procedure may be triggered by the terminal, which may be set according to actual requirements.

In this embodiment, when the terminal needs to perform SCG suspend and/or SCG resume, the terminal initiates SCG suspend or an SCG resume indication to the network-side device, thereby effectively improving the triggering efficiency of the SCG suspend procedure or the SCG resume procedure, and reducing the trigger latency.

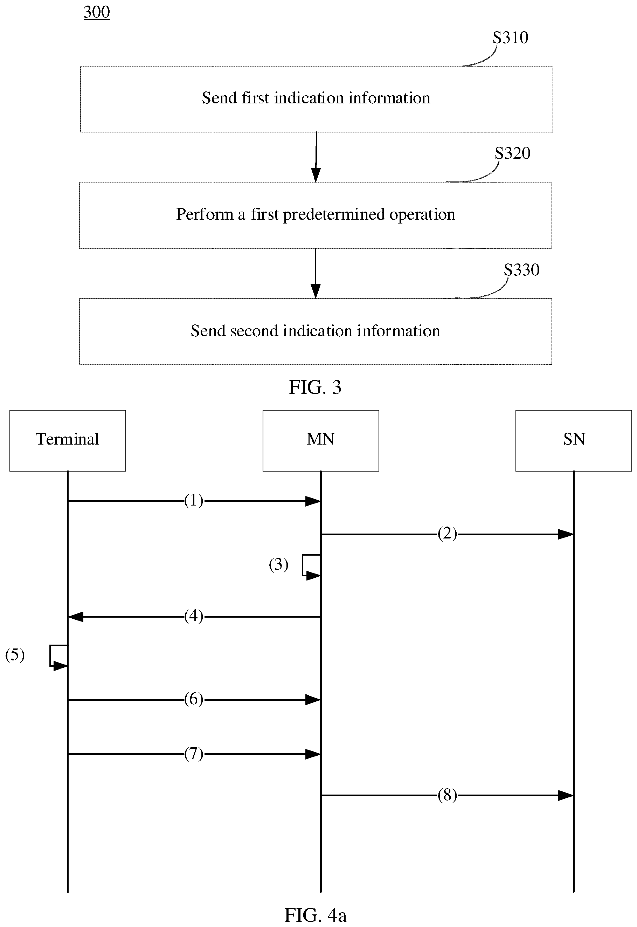

As shown in FIG. 3, FIG. 2 is a schematic flowchart of a method 300 for controlling a secondary cell group according to an embodiment of this application. The method 300 may be performed by a terminal, for example, may be performed by software and/or hardware installed in the terminal. The method 300 at least may include the following steps.

S310. Send first indication information.

In addition to referring to the related description in the method 200 for an implementation process of S310. In this embodiment, as a possible implementation, in a case that the network-side device includes an MN and an SN, the implementation process in which the terminal sends the first indication information may include the following (1) or (2).
(1) The terminal sends the first indication information to the MN. In this case, if the MN receives the first indication information, the MN indicates the SN to perform SCG suspend according to the first indication information.
(2) The terminal sends the first indication information to the SN. In this case, if the SN receives the first indication information, the SN performs SCG suspend according to the first indication information, and sends an SCG suspend notification to the MN.

As another possible implementation, the first indication information may carry SCG suspend reason information, so that the network-side device may determine suspend duration, suspend timing, or the like, when an SCG is suspended according to the suspend reason information, so as to ensure communication performance in the SCG suspend process.

In this embodiment, the SCG suspend reason information may include at least one of the following (1) to (5).
(1) Multi-SIM (Multi-SIM) purpose; and for example, it is assumed that the terminal is a multi-SIM terminal with UE1 and UE2, where when the UE1 is in the SCG connection period, the UE2 needs to occupy the SCG resource. In this case, the terminal UE1 may send the first indication information through the multi-SIM purpose, to indicate the SCG suspend.
(2) Perform a first specified service, where the first specified service is sensitive to a latency; and the first specified service may be an instant call service, such as a video service, a voice service, or the like, or other multimedia services, which is not limited herein.
(3) A non-3rd generation partnership project (3GPP) purposes; and for example, the non-3GPP purpose may include that Bluetooth interference or WiFi interference occurs in the terminal, or the terminal needs to share resources, or the like, which is not limited herein.
(4) Perform a specified signaling process; and for example, the specified signaling may include tracking area update (Tacking Area Update, TAU), routing notification area update (Routing Notification Area Update, RNAU), registration update, or the like, which is not limited herein.
(5) Perform a second specified service, for example, the second specified service may include a voice call (voice call), a signaling (signaling) process of other UEs in the multi-SIM terminal, or the like.

It should be noted that reasons for the SCG suspend may further include other reasons except the foregoing (1) to (5), which are not limited herein.

As yet another possible implementation, the first indication information may be transmitted through terminal auxiliary information or a leaving message (Leaving Message).

In a case that the first indication information is transmitted through terminal auxiliary information, the terminal auxiliary information may further include SCG suspend preference (SCG Suspend preference) and/or SCG release preference (SCG release preference).

In a case that the first indication information is transmitted through a leaving message, the leaving message further includes an SCG leaving notification (SCG Leaving Notification) and/or an SCG release notification (SCG release Notification).

S320. Perform a first predetermined operation.

The first predetermined operation may include at least one of (1) to (3).
(1) Locally suspend an SCG.
(2) Locally release an SCG.
   By performing (1) or (2), the terminal may implement efficient suspend of the SCG. It should be noted that after sending the first indication information, the terminal may suspend the SCG immediately, or suspend the SCG after a latency, which is not limited herein.
(3) Wait to receive a network response message, where the network response message corresponds to the first indication information.

The network response message is sent by the network-side device, after receiving the first indication information, to the terminal through the MCG, to indicate the terminal to perform the SCG suspend. In this case, the network response message may include at least one of the following (a) to (d).
(a) An SCG suspend message.
(b) An SCG release message.
(c) A timing configuration message.

The timing configuration message is used for indicating the terminal to control a state of the SCG based on a target timer.

For example, when the terminal receives the network response message, the terminal starts a target timer, and suspends the SCG in a case that the target timer does not expire; and deactivates the SCG, or releases the SCG in a case that the target timer expires.

In this embodiment, the target timer may be pre-configured in the terminal, which is not limited herein.
(d) Reconfiguration information, where the reconfiguration information includes information used for indicating the terminal to reconfigure a bearer or SCG reconfiguration information.

In an implementation, in addition to transmitting the reconfiguration information to the terminal through the network response message, the network-side device may further, when receiving the first indication information, send the reconfiguration information to the terminal when receiving the first indication information, and offload (Offload) a quality of service (QoS) requirement transmitted by the SN to the MN.

Correspondingly, when the terminal receives the reconfiguration information, the terminal may perform a reconfiguration operation according to the reconfiguration information, such as offloading the quality of service (QoS) requirement transmitted by the SN to the MN; and in a case of completing the reconfiguration operation, the terminal sends a reconfiguration complete message (RRC Reconfiguration Complete message). In this embodiment, by sending the reconfiguration information, communication quality may be ensured after the SCG is suspended.

In addition, if the terminal has sent the second indication information to the network-side device within X (X=1, 2, 3...) seconds before reconfiguration or handover, the terminal may resend the second indication information or carry the second indication information in the reconfiguration complete message again, so as to indicate the network-side device to resume the SCG, that is, release the SCG suspend state.

It is to be noted that when the network-side device performs SCG suspend according to the first indication information (such as the MN or the SN), that is, the SCG is in a suspended state. The network-side device may perform at least one of the following (1) to (7).
(1) Send information through an SCG connection unsuccessfully; and it may be understood that because the SCG is already in the suspended state, the network-side device and the terminal cannot perform communication data exchange through the SCG connection.
(2) Reserve some or all of allocated SCG resources.
(3) Reserve terminal context (context) information.
(4) Perform an SCG-related process through an SCG, where the SCG-related process includes at least one of SCG establishment, SCG release, and SCG reconfiguration. It should be noted that when the network-side device performs the SCG-related process, the SCG is in the suspended state.
(5) Resume an SCG to a normal transmission state unsuccessfully; and that is, the network-side device and the terminal negotiate and determine to resume the SCG when the network-side device receives the second indication information sent by the terminal. Otherwise, the network-side device cannot actively resume the SCG to a normal transmission state.
(6) Send a network response message, where the network response message corresponds to the first indication information. The network response message is sent by the network-side device, after receiving the first indication information, to the terminal through the MCG, to indicate the terminal to perform the SCG suspend.

In an implementation, corresponding to the foregoing (6), after sending the first indication information, the terminal may perform waiting to receive the network response message, and perform SCG suspend after receiving the network response message sent by the network-side device.

S330. Send second indication information.

Similar to the first indication information in S310, an implementation process for the terminal to send the second indication information may also include the following (1) or (2).
(1) Send the second indication information to the MN. In this case, if the MN receives the second indication information, the MN indicates the SN to perform SCG resume according to the second indication information.
(2) Send the second indication information to the secondary node SN. In this case, if the SN receives the second indication information, the SN performs SCG resume according to the second indication information, and sends an SCG resume notification to the MN.

In an implementation, in a case that the MN receives the second indication information or the SCG resume notification, the MN may perform reconfiguration again, such as offloading the quality of service (QoS) requirement transmitted by the MN to the SN. Correspondingly, the network-side device sends the reconfiguration information to the terminal, so that the terminal also offloads (Offloads) the quality of service (QoS) requirement transmitted by the MN to the SN, so as to ensure communication quality.

In another implementation, the second indication information may be transmitted through terminal auxiliary information or a return message (Return Message).

In a case that the second indication information is transmitted through the terminal auxiliary information, the terminal auxiliary information may further include SCG resume preference (SCG Resume preference) and/or SCG addition preference (SCG Addition preference). The SCG resume preference is used for indicating the terminal to resume the SCG connection. The SCG addition preference is used for indicating the terminal to add the SCG.

In a case that the second indication information is transmitted through a return message, the return message further includes an SCG return notification (SCG Return Notification), and the SCG return notification is used for notifying the terminal to return to the SCG.

In yet another possible implementation, when it is necessary to perform SCG resume, in addition to the second indication information sent by the terminal to the network-side device, the terminal may further receive an SCG resume indication sent by the network-side device, and perform SCG resume according to the SCG resume indication, which is limited in this embodiment.

Based on the method 200 and the method 300 for controlling the secondary cell group, an implementation process of controlling the secondary cell group is further described below with reference to different examples.

### Example 1

It is assumed that the terminal is a multi-SIM terminal including the UE and the UE2, the UE is in a connected state and establishes an SCG connection. In this case, if the UE2 needs to occupy a terminal MR-DC secondary cell group resource, then, as shown in FIG. 4a, the implementation process of controlling the secondary cell group may include the following process.
(1) The UE sends the first indication information to the MN, and the first indication information carries the SCG suspend reason information, that is, the multi-SIM purpose.
   Optionally, after sending the first indication information, the UE performs locally suspending the SCG and locally releasing the SCG, or performs SCG suspend after receiving the network response message sent by the MN.
(2) In a case that the MN receives the first indication information, the MN indicates the SN to perform the SCG suspend.
(3) The MN performs a reconfiguration operation.
(4) The MN sends reconfiguration information to the terminal.
(5) The UE performs reconfiguration according to the reconfiguration information.
(6) The UE sends a reconfiguration complete message to the MN.
(7) In a case that the UE needs to resume the SCG, the UE sends the second indication information to the MN. Optionally, after sending the second indication information, the UE performs locally resuming an SCG and locally releasing the SCG, or performs SCG resume after receiving the SCG resume indication sent by the MN.
(8) In a case that the MN receives the second indication information, the MN indicates the SN to perform the SCG resume. Example 2

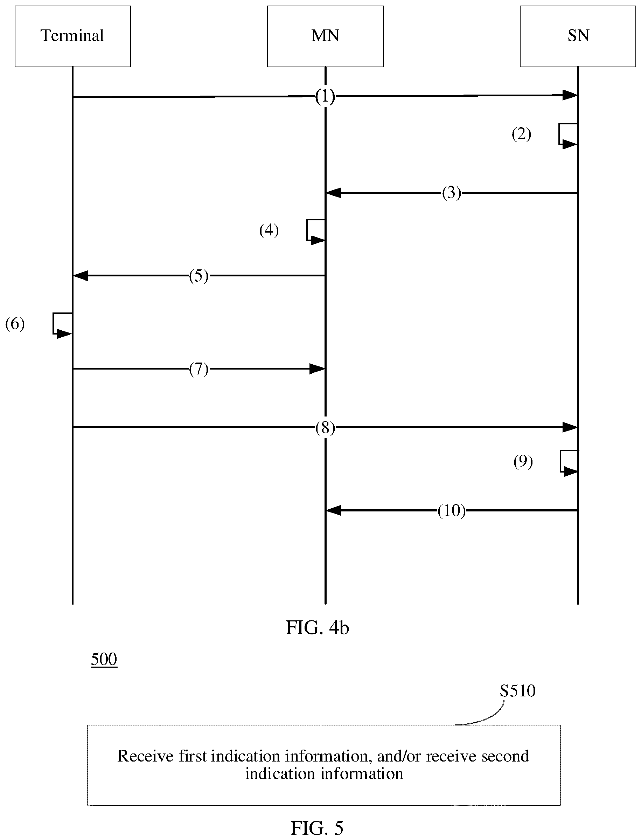

It is assumed that the terminal is a multi-SIM terminal including the UE and the UE2, the UE is in a connected state and establishes an SCG connection. In this case, if the UE2 needs to occupy a UE secondary cell group resource or capability, then, as shown in FIG. 4b, the implementation process of controlling the secondary cell group may include the following process.
(1) The UE sends the first indication information to the SN, and the first indication information carries the SCG suspend reason information, that is, the multi-SIM purpose.
   Optionally, after sending the first indication information, the UE performs locally suspending the SCG and locally releasing the SCG, or performs SCG suspend after receiving the network response message sent by the MN.
(2) In a case that the SN receives the first indication information, the SN performs the SCG suspend.
(3) The SN sends an SCG suspend complete notification to the MN.
(4) The MN performs a reconfiguration operation.
(5) The MN sends reconfiguration information to the terminal.
(6) The UE performs reconfiguration according to the reconfiguration information.
(7) The UE sends a reconfiguration complete message to the MN.
(8) In a case that the UE needs to resume the SCG, the UE sends the second indication information to the SN. Optionally, after sending the second indication information, the UE performs locally resuming an SCG and locally releasing the SCG, or performs SCG resume after receiving the SCG resume indication sent by the MN.
(9) In a case that the SN receives the first indication information, the SN performs the SCG resume.
(10) Send an SCG resume notification to the MN.

It should be noted that in the foregoing example 1 and example 2, if the UE does not establish an SCG connection, the SCG suspend procedure may be initiated through the MCG, such as sending the first indication information through the MCG; and if the UE is in the SCG connection period, the UE may send the first indication information through a terminal auxiliary message or a leaving message. Correspondingly, when the SCG needs to be resumed, the UE may implement transmission of the second indication information through the terminal auxiliary message or a return message. For related descriptions, refer to the descriptions in the foregoing method embodiments, and details are not repeated herein.

In this embodiment, the SCG suspend state and process initiated by the terminal is introduced, which may efficiently trigger the SCG suspend and SCG resume process, synchronize the SCG state between the terminal and the network-side device, reduce the latency of the suspended SCG connection, minimize interruption duration of the SCG connection, and improve the wireless communication performance.

As shown in FIG. 5, FIG. 5 is a schematic flowchart of a method 500 for controlling a secondary cell group according to an embodiment of this application. The method 500 may be performed by a network-side device, for example, may be performed by software and/or hardware installed in the terminal. The method 500 at least may include the following steps.

S510. Receive first indication information, and/or receive second indication information.

The first indication information is used for indicating SCG suspend to a network-side device, and the second indication information is used for indicating SCG resume to the network-side device.

In this embodiment, the terminal initiates SCG suspend or an SCG resume indication to the network-side device, which may effectively improve the triggering efficiency of the SCG suspend procedure or the SCG resume procedure, and reduce the trigger latency.

In a possible implementation, in a case that the network-side device includes an MN and an SN, the receiving first indication information includes: receiving, by the MN, the first indication information, or receiving, by the SN, the first indication information; and the receiving second indication information includes: receiving, by the MN, the second indication information, or receiving, by the SN, the second indication information.

In another possible implementation, the method further includes: in a case that the MN receives the first indication information or the second indication information, indicating, by the MN, the SN to perform the SCG suspend according to the first indication information, or indicating, by the MN, the SN to perform the SCG resume according to the second indication information.

In another possible implementation, the method further includes: in a case that the SN receives the first indication information or the second indication information, performing, by the SN, the SCG suspend according to the first indication information, and sending an SCG suspend notification to the MN; or performing, by the SN, the SCG resume according to the second indication information, and sending an SCG resume notification to the MN.

In another possible implementation, the first indication information carries SCG suspend reason information, and the SCG suspend reason information includes at least one of the following: a multi-SIM purpose; performing a first specified service, where the first specified service is sensitive to a latency; a non-3GPP purposes; performing a specified signaling process; and performing a second specified service.

In another possible implementation, in a case that the first indication information is transmitted through terminal auxiliary information, the terminal auxiliary information further includes SCG suspend preference and/or SCG release preference; and in a case that the first indication information is transmitted through a leaving message, the leaving message further includes an SCG leaving notification and/or an SCG release notification.

In another possible implementation, in a case that the second indication information is transmitted through terminal auxiliary information, the terminal auxiliary information further includes SCG resume preference and/or SCG addition preference; and in a case that the second indication information is transmitted through a return message, the return message further includes an SCG return notification.

In another possible implementation, the SCG suspend includes at least one of the following: disabling the SCG; suspending a dual connectivity capability; disabling a dual connectivity capability; suspending an SCG resource; disabling an SCG resource; deactivating an SCG connection; and releasing an SCG connection.

In another possible implementation, the SCG resume includes at least one of the following: enabling the SCG resume; resuming a dual connectivity capability; enabling a dual connectivity capability; resuming an SCG resource; enabling an SCG resource; activating an SCG connection; and resuming an SCG connection.

In another possible implementation, after the receiving first indication information, the method further includes at least one of the following: sending information through an SCG connection unsuccessfully; reserving some or all of allocated SCG resources; reserving terminal context information; performing an SCG-related process through the SCG, where the SCG-related process includes at least one of SCG establishment, SCG release, and SCG reconfiguration; resuming the SCG to a normal transmission state unsuccessfully; and sending a network response message, where the network response message corresponds to the first indication information.

In another possible implementation, the network response message includes at least one of the following: an SCG suspend message; an SCG release message; a timing configuration message, where the timing configuration message is used for indicating the terminal to control a state of the SCG based on a target timer; and reconfiguration information, where the reconfiguration information includes information used for indicating the terminal to reconfigure a bearer or SCG reconfiguration information.

In another possible implementation, the receiving second indication information includes: receiving a reconfiguration complete message in a case that the network response message includes the reconfiguration information, where the second indication information is carried in the reconfiguration complete message.

In another possible implementation, the controlling a state of the SCG based on a target timer includes: suspending the SCG in a case that the target timer does not expire; and deactivating the SCG or releasing the SCG in a case that the target timer expires.

It should be noted that for the implementation process of the method for controlling SCG suspend provided in this embodiment, refer to related descriptions in the foregoing method 200 and method 300, and details are not repeated herein to avoid repetition.

It is to be noted that in the method for controlling SCG suspend provided in the embodiments of this application, an execution entity may be an apparatus for controlling SCG suspend, or the apparatus for controlling SCG suspend includes a control module configured to perform the method for controlling the SCG suspend. The following part of the embodiments of this application uses the method for controlling the SCG suspend performed by the apparatus for controlling the SCG suspend as an example to describe the apparatus for controlling the SCG suspend provided in the embodiments of this application.

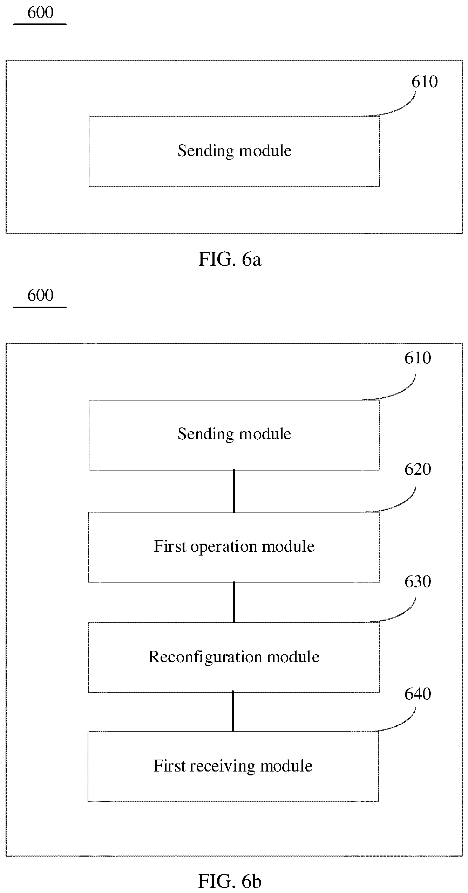

As shown in FIG. 6a, FIG. 6a is a block diagram of an apparatus 600 for controlling a secondary cell group according to an exemplary embodiment of this application. The apparatus 600 includes: a sending module 610, configured to send first indication information, and/or, send second indication information, where the first indication information is used for indicating SCG suspend to a network-side device, and the second indication information is used for indicating SCG resume to the network-side device, a processor

In a possible implementation, the sending module 610 sending the first indication information, includes any one of the following: sending the first indication information to the master node MN; and sending the first indication information to the secondary node SN; and the sending module 610 sending the second indication information includes any one of the following: sending the second indication information to the master node MN; and sending the second indication information to the secondary node SN.

In another possible implementation, the first indication information carries SCG suspend reason information, and the SCG suspend reason information includes at least one of the following: a multi-SIM purpose; performing a first specified service, where the first specified service is sensitive to a latency; a non-3GPP purposes; performing a specified signaling process; and performing a second specified service.

In another possible implementation, in a case that the first indication information is transmitted through terminal auxiliary information, the terminal auxiliary information further includes SCG suspend preference and/or SCG release preference; and in a case that the first indication information is transmitted through a leaving message, the leaving message further includes an SCG leaving notification and/or an SCG release notification.

In another possible implementation, referring to FIG. 6b, the apparatus 600 further includes a first operation module 620, and the first operation module 620 is configured to perform any one of the following: locally suspending the SCG; locally releasing the SCG; and waiting to receive a network response message, where the network response message corresponds to the first indication information.

In another possible implementation, the network response message includes at least one of the following: an SCG suspend message; an SCG release message; a timing configuration message, where the timing configuration message is used for indicating the terminal to control a state of the SCG based on a target timer; and reconfiguration information, where the reconfiguration information includes information used for indicating the terminal to reconfigure a bearer or SCG reconfiguration information.

In another possible implementation, the controlling a state of the SCG based on a target timer includes: suspending the SCG in a case that the target timer does not expire; and deactivating the SCG or releasing the SCG in a case that the target timer expires.

In another possible implementation, the SCG suspend includes at least one of the following: disabling the SCG; suspending a dual connectivity capability; disabling a dual connectivity capability; suspending an SCG resource; disabling an SCG resource; deactivating an SCG connection; and releasing an SCG connection.

In another possible implementation, in a case that the second indication information is transmitted through terminal auxiliary information, the terminal auxiliary information further includes SCG resume preference and/or SCG addition preference; and in a case that the second indication information is transmitted through a return message, the return message further includes an SCG return notification.

In another possible implementation, the sending module 610 is configured to send a reconfiguration complete message in a case that reconfiguration information sent by the network-side device is received, where the reconfiguration complete message carries the second indication information.

In another possible implementation, referring to FIG. 6b, the apparatus 600 further includes: a first receiving module 640, configured to receive an SCG resume indication sent by the network-side device, where the SCG resume indication is used for indicating the terminal to perform SCG resume; and/or a reconfiguration module 630, configured to perform, in a case that a received network response message includes reconfiguration information, a reconfiguration operation according to the reconfiguration information.

In another possible implementation, the SCG resume includes at least one of the following: enabling the SCG resume; resuming a dual connectivity capability; enabling a dual connectivity capability; resuming an SCG resource; enabling an SCG resource; activating an SCG connection; and resuming an SCG connection.

The apparatus 600 for controlling a secondary cell group in the embodiments of this application may be an apparatus, and may also be a component in a terminal, an integrated circuit, or a chip. The apparatus may be a mobile terminal, or may be a non-mobile terminal. For example, the mobile terminal may include, but is not limited to, a type of the terminal 11 listed above, and a non-mobile terminal may be a server, a network attached storage (Network Attached Storage, NAS), a personal computer (personal computer, PC), a television (television, TV), a cash machine, a self-service machine, or the like, which is not specifically limited in this embodiment of this application.

The apparatus 600 for controlling a secondary cell group in the embodiments of this application may be an apparatus having an operating system. The operating system may be an Android (Android) operating system, may be an ios operating system, and may further be another possible operating system, which is not specifically limited in this embodiment of this application.

The apparatus 600 for controlling a secondary cell group provided in the embodiments of this application may implement various processes of the method embodiments in FIG. 2 to FIG. 4a and FIG. 4b, and implement the same technical effect, which will not be repeated herein to avoid repetition.

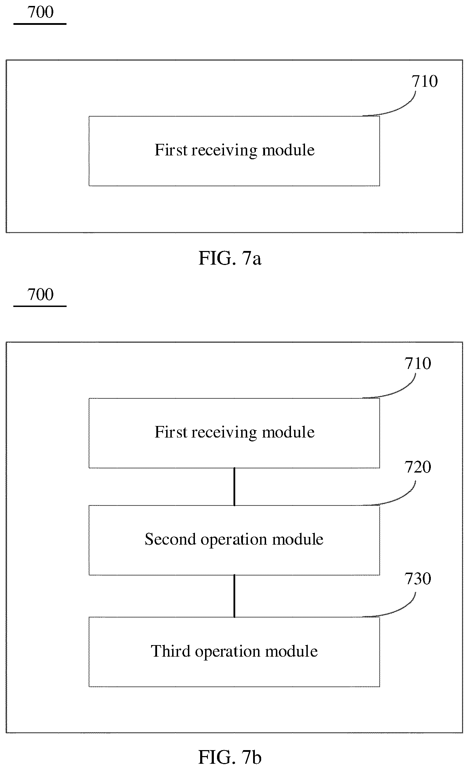

As shown in FIG. 7a, FIG. 7a is a schematic block diagram of an apparatus 700 for controlling a secondary cell group according to an exemplary embodiment of this application. The apparatus 700 includes: a second receiving module 710, configured to receive first indication information, and/or receive second indication information, where the first indication information is used for indicating SCG suspend to a network-side device, and the second indication information is used for indicating SCG resume to the network-side device; and a processor.

In a possible implementation, in a case that the network-side device includes a master node MN and a secondary node SN, the second receiving module 710 receives first indication information includes: receiving, by the MN, the first indication information, or receiving, by the SN, the first indication information; and the second receiving module 710 receiving second indication information includes: receiving, by the MN, the second indication information, or receiving, by the SN, the second indication information.

In another possible implementation, the apparatus 700 further includes: in a case that the MN receives the first indication information or the second indication information, indicating, by the MN, the SN to perform the SCG suspend according to the first indication information, or indicating, by the MN, the SN to perform the SCG resume according to the second indication information.

In another possible implementation, referring to FIG. 7b, the apparatus 700 further includes: a second operation module 720, configured to, in a case that the SN receives the first indication information or the second indication information, perform the SCG suspend according to the first indication information, and send an SCG suspend notification to the MN; or perform the SCG resume according to the second indication information, and send an SCG resume notification to the MN.

In another possible implementation, the first indication information carries SCG suspend reason information, and the SCG suspend reason information includes at least one of the following: a multi-SIM purpose; performing a first specified service, where the first specified service is sensitive to a latency; a non-3GPP purposes; performing a specified signaling process; and performing a second specified service.

In another possible implementation, in a case that the first indication information is transmitted through terminal auxiliary information, the terminal auxiliary information further includes SCG suspend preference and/or SCG release preference; and in a case that the first indication information is transmitted through a leaving message, the leaving message further includes an SCG leaving notification and/or an SCG release notification.

In another possible implementation, in a case that the second indication information is transmitted through terminal auxiliary information, the terminal auxiliary information further includes SCG resume preference and/or SCG addition preference; and in a case that the second indication information is transmitted through a return message, the return message further includes an SCG return notification.

In another possible implementation, the SCG suspend includes at least one of the following: disabling the SCG; suspending a dual connectivity capability; disabling a dual connectivity capability; suspending an SCG resource; disabling an SCG resource; deactivating an SCG connection; and releasing an SCG connection.

In another possible implementation, the SCG resume includes at least one of the following: enabling the SCG resume; resuming a dual connectivity capability; enabling a dual connectivity capability; resuming an SCG resource; enabling an SCG resource; activating an SCG connection; and resuming an SCG connection.

In another possible implementation, referring to FIG. 7b again, the apparatus 700 further includes a third operation module 730, configured to perform at least one of the following: sending information through an SCG connection unsuccessfully; reserving some or all of allocated SCG resources; reserving terminal context information; performing an SCG-related process through the SCG, where the SCG-related process includes at least one of SCG establishment, SCG release, and SCG reconfiguration; resuming the SCG to a normal transmission state unsuccessfully; and sending a network response message, where the network response message corresponds to the first indication information.

In another possible implementation, the network response message includes at least one of the following: an SCG suspend message; an SCG release message; a timing configuration message, where the timing configuration message is used for indicating the terminal to control a state of the SCG based on a target timer; and reconfiguration information, where the reconfiguration information includes information used for indicating the terminal to reconfigure a bearer or SCG reconfiguration information.

In another possible implementation, the second receiving module 710 is configured to receive a reconfiguration complete message in a case that the network response message includes the reconfiguration information, where the second indication information is carried in the reconfiguration complete message.

In another possible implementation, the controlling a state of the SCG based on a target timer includes: suspending the SCG in a case that the target timer does not expire; and deactivating the SCG or releasing the SCG in a case that the target timer expires.

The apparatus 700 for controlling a secondary cell group in the embodiments of this application may be an apparatus, and may also be a component in a network-side device, an integrated circuit, or a chip. For example, the network-side device may include but is not limited to the type of the network-side device 12 listed above. This is not specifically limited in the embodiments of this application.

In addition, the apparatus 700 for controlling a secondary cell group in the embodiments of this application may be an apparatus having an operating system. The operating system may be an Android (Android) operating system, may be an ios operating system, and may further be another possible operating system, which is not specifically limited in this embodiment of this application.

The apparatus 700 for controlling a secondary cell group provided in the embodiments of this application may implement various processes of the method embodiment in FIG. 5, and implement the same technical effect, which will not be repeated herein to avoid repetition.

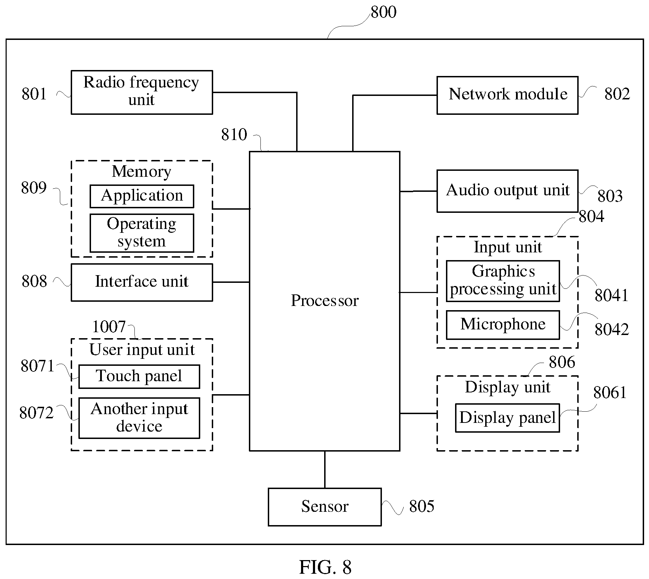

FIG. 8 is a schematic diagram of a hardware structure of a terminal for implementing various embodiments of this application. The terminal 800 includes but is not limited to: components such as a radio frequency unit 801, a network module 802, an audio output unit 803, an input unit 804, a sensor 805, a display unit 806, a user input unit 807, an interface unit 808, a memory 809, and a processor 810.

A person skilled in the art may understand that the terminal 800 may further include a power supply (such as a battery) for supplying power to the components. The power supply may be logically connected to the processor 810 by a power management system, thereby implementing functions such as charging, discharging, and power consumption management by using the power management system. A terminal structure shown in FIG. 8 does not constitute a limitation to the terminal, and the terminal may include more or fewer components than those shown in the figure, or some components may be combined, or a different component deployment may be used, and details are not repeated herein.

It should be understood that, in this embodiment of this application, the input unit 804 may include a graphics processing unit (Graphics Processing Unit, GPU) 8041 and a microphone 8042. The graphics processing unit 8041 performs processing on image data of a static picture or a video that is obtained by an image acquisition apparatus (for example, a camera) in a video acquisition mode or an image acquisition mode. The display unit 806 may include a display panel 8061, and the display panel 8061 may be configured by using a liquid crystal display, an organic light-emitting diode, or the like. The user input unit 807 includes a touch panel 8071 and another input device 8072. The touch panel 8071 is also referred to as a touchscreen. The touch panel 8071 may include two parts: a touch detection apparatus and a touch controller. The another input device 8072 may include, but not limited to, a physical keyboard, a functional key (such as a volume control key or a switch key), a track ball, a mouse, and a joystick, which are not described herein in detail.

In this embodiment of this application, the radio frequency unit 801 receives downlink data from a network-side device and transmits the downlink data to the processor 810 for processing; and transmits uplink data to the network-side device. Generally, the radio frequency unit 801 includes, but is not limited to, an antenna, at least one amplifier, a transceiver, a coupler, a low noise amplifier, a duplexer, and the like. In addition, the radio frequency circuit may further communicate with another device through wireless communication.

The memory 809 may be configured to store a software program or an instruction and various data. The memory 809 may mainly include a program or an instruction storage area and a data storage area. The program or instruction storage area may store an operating system, an application program or instruction required by at least one function (such as a sound playback function and an image display function), and the like. In addition, the memory 809 may include a high-speed random access memory, and may further include a non-volatile memory, where the non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. Such as at least one magnetic disk storage device, a flash storage device, or other non-volatile solid-state storage devices.

The processor 810 may include one or more processing units; and optionally, the processor 810 may integrate an application processor and a modem processor. The application processor mainly processes an operating system, a user interface, an application program or instruction, and the like. The modem processor mainly processes wireless communication, such as a baseband processor. It may be understood that, the modem processor may alternatively not be integrated in the processor 810.

The radio frequency unit 801 is configured to send first indication information, and/or, send second indication information, where the first indication information is used for indicating SCG suspend to a network-side device, and the second indication information is used for indicating SCG resume to the network-side device.

In this embodiment, the terminal sends the first indication information and/or the second indication information through the radio frequency unit 801, and indicates the SCG suspend and/or resume to the network-side device. Therefore, the efficient triggering of the SCG suspend procedure and/or the SCG resume procedure may be effectively implemented, and the latency of the SCG suspend procedure and/or the SCG resume procedure may be reduced.

In a possible implementation, in a case that the network-side device includes a master node MN and a secondary node SN, the radio frequency unit 801 is configured to send the first indication information, including any one of the following: sending the first indication information to the MN; and sending the first indication information to the SN; and the radio frequency unit 801 is configured to send the second indication information, including any one of the following: sending the second indication information to the MN; and sending the second indication information to the SN.

In another possible implementation, the first indication information carries SCG suspend reason information, and the SCG suspend reason information includes at least one of the following: a multi-SIM purpose; performing a first specified service, where the first specified service is sensitive to a latency; a non-3GPP purposes; performing a specified signaling process; and performing a second specified service.

In yet another possible implementation, in a case that the first indication information is transmitted through terminal auxiliary information, the terminal auxiliary information further includes SCG suspend preference and/or SCG release preference; and in a case that the first indication information is transmitted through a leaving message, the leaving message further includes an SCG leaving notification and/or an SCG release notification.

In yet another possible implementation, the processor 810 is configured to perform any one of the following: locally suspending the SCG; locally releasing the SCG; and waiting to receive a network response message, where the network response message corresponds to the first indication information.

In yet another possible implementation, the network response message includes at least one of the following: an SCG suspend message; an SCG release message; a timing configuration message, where the timing configuration message is used for indicating the terminal to control a state of the SCG based on a target timer; and reconfiguration information, where the reconfiguration information includes information used for indicating the terminal to reconfigure a bearer or SCG reconfiguration information.

In yet another possible implementation, the controlling a state of the SCG based on a target timer includes: suspending the SCG in a case that the target timer does not expire; and deactivating the SCG or releasing the SCG in a case that the target timer expires.

In yet another possible implementation, the SCG suspend includes at least one of the following: disabling the SCG; suspending a dual connectivity capability; disabling a dual connectivity capability; suspending an SCG resource; disabling an SCG resource; deactivating an SCG connection; and releasing an SCG connection.

In yet another possible implementation, in a case that the second indication information is transmitted through terminal auxiliary information, the terminal auxiliary information further includes SCG resume preference and/or SCG addition preference; and in a case that the second indication information is transmitted through a return message, the return message further includes an SCG return notification.

In yet another possible implementation, the radio frequency unit 801 sending the second indication information includes: sending a reconfiguration complete message in a case that reconfiguration information sent by the network-side device is received, where the reconfiguration complete message carries the second indication information.

In yet another possible implementation, the radio frequency unit 801 is further configured to perform any one of the following: receiving an SCG resume indication sent by the network-side device, where the SCG resume indication is used for indicating the terminal to perform SCG resume; and in a case that a received network response message includes reconfiguration information, performing a reconfiguration operation according to the reconfiguration information.

In yet another possible implementation, the SCG resume includes at least one of the following: enabling the SCG resume; resuming a dual connectivity capability; enabling a dual connectivity capability; resuming an SCG resource; enabling an SCG resource; activating an SCG connection; and resuming an SCG connection.

The processor 810 invokes the instruction or program in the memory 809 to perform the method performed by each module shown in FIG. 6a and FIG. 6b, and implements the same technical effect, which will not be repeated herein to avoid repetition.

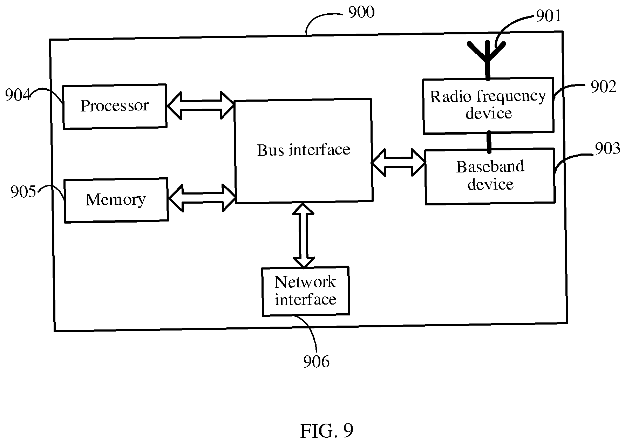

The embodiments of this application further provide a network-side device. As shown in FIG. 9, the network-side device 900 includes: an antenna 901, a radio frequency apparatus 902, and a baseband apparatus 903. The antenna 901 is connected to the radio frequency apparatus 902. In an uplink direction, the radio frequency apparatus 902 receives information through the antenna 901, and transmits the received information to the baseband apparatus 903 for processing. In a downlink direction, the baseband apparatus 903 performs processing on the to-be-transmitted information, and transmits the to-be-transmitted information to the radio frequency apparatus 92. After performing processing on the received information, the radio frequency apparatus 92 transmits the received information out through the antenna 91.

The frequency band processing apparatus may be located in the baseband apparatus 903, and the method performed by the network-side device in the foregoing embodiment may be implemented in the baseband apparatus 903. The baseband apparatus 903 includes a processor 904 and a memory 905.

The baseband apparatus 903 may include, for example, at least one baseband board, and a plurality of chips are arranged on the baseband board. As shown in FIG. 9, for example, one of the chips is a processor 904, and is connected to the memory 905, to invoke the program in the memory 905, and to perform the network-side device operation shown in the foregoing method embodiments.

The baseband apparatus 903 may further include a network interface 906 used for exchanging information with the radio frequency apparatus 902. For example, the interface is a common public radio interface (common public radio interface, CPRI).

Specifically, the network-side device of this embodiment of the present invention further includes: an instruction or a program stored in the memory 905 and executable on the processor 904. The processor 904 invokes the instruction or program in the memory 905 to perform the method performed by each module shown in FIG. 7a and FIG. 7b, and implements the same technical effect, which will not be repeated herein to avoid repetition.

The embodiments of this application further provide a readable storage medium storing therein a program or an instruction. When the program or instruction is executed by a processor, the processes of the embodiments of the method for the control secondary cell group are performed, and the same technical effects can be achieved, which will not be repeated herein to avoid repetition.

The processor is a processor in the terminal described in the foregoing embodiment. The readable storage medium includes a computer-readable storage medium, for example, a Read-Only Memory (Read-Only Memory, ROM), a Random Access Memory (Random Access Memory, RAM), a magnetic disk, an optical disc or the like.

The embodiments of this application further provide a chip. The chip includes a processor and a communication interface. The communication interface is coupled to the processor. The processor is configured to execute a program or an instruction on a network-side device to implement various processes of the embodiment of the method for controlling a secondary cell group, and may implement the same technical effect, which will not be repeated herein to avoid repetition.

It should be understood that the chip mentioned in the embodiments of this application may further be referred to as a system-level chip, a system chip, a chip system, a system on chip, or the like.

The embodiments of this application further provide a computer program product, including a processor, a memory, and a program or an instruction stored in the memory and executable on the processor, when the program or instruction is executed by the processor, the various processes of the embodiment of the method for controlling a secondary cell group are implemented, and the same technical effect can be achieved, which will not be repeated herein to avoid repetition.

It is to be noted that the terms "include", "comprise" and any other variants mean to cover the non-exclusive inclusion, so that the process, method, object, or apparatus which include a series of elements not only include those elements, but also include other elements which are not clearly listed, or include inherent elements of the process, method, object, or apparatus. Without more limitations, elements defined by the sentence "including one" does not exclude that there are still other same elements in the processes, methods, objects, or apparatuses. In addition, it should be noted that the scope of the methods and apparatuses in the implementations of this application is not limited to performing functions in the order shown or discussed, and may further include performing functions in a substantially simultaneous manner or in a reverse order according to the functions involved, for example, the described methods may be performed in an order different from the order described, and various steps may be added, omitted, or combined. In addition, features described with reference to some examples may be combined in other examples.

Through the foregoing description on the implementations, a person skilled in the art can clearly learn that the foregoing embodiment methods may be implemented by using software in combination with a necessary universal hardware platform. Certainly, the embodiment methods may also be implemented by using hardware, but the former is a better implementation in many cases. Based on such an understanding, the technical solutions of this application essentially, or the part contributing to the related art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network-side device, or the like) to perform the methods described in the embodiments of this application.

Although the embodiments of this application have been described above with reference to the accompanying drawings, this application is not limited to the specific implementations described above, and the specific implementations described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A method for controlling a secondary cell group, performed by a terminal, and the method comprising:
sending first indication information, and/or sending second indication information; wherein
the first indication information is used for indicating SCG suspend to a network-side device, and the second indication information is used for indicating SCG resume to the network-side device.

2. The method according to claim 1, wherein in a case that the network-side device comprises a master node MN and a secondary node SN,
the sending first indication information comprises any one of the following:
sending the first indication information to the MN; and
sending the first indication information to the SN; and
the sending second indication information comprises any one of the following:
sending the second indication information to the MN; and
sending the second indication information to the SN.

3. The method according to claim 1, wherein the first indication information carries SCG suspend reason information, and the SCG suspend reason information comprises at least one of the following:
a multi-SIM purpose;
performing a first specified service, wherein the first specified service is sensitive to a latency;
a non-3GPP purposes;
performing a specified signaling process; and
performing a second specified service.

4. The method according to claim 1, wherein
in a case that the first indication information is transmitted through terminal auxiliary information, the terminal auxiliary information further comprises SCG suspend preference and/or SCG release preference; and
in a case that the first indication information is transmitted through a leaving message, the leaving message further comprises an SCG leaving notification and/or an SCG release notification.

5. The method according to claim 1, wherein after the sending first indication information, the method further comprises any one of the following:
locally suspending the SCG;
locally releasing the SCG; and
waiting to receive a network response message, wherein the network response message corresponds to the first indication information.

6. The method according to claim 5, wherein the network response message comprises at least one of the following:
an SCG suspend message;
an SCG release message;
a timing configuration message, wherein the timing configuration message is used for indicating the terminal to control a state of the SCG based on a target timer; and
reconfiguration information, wherein the reconfiguration information comprises information used for indicating the terminal to reconfigure a bearer or SCG reconfiguration information.

7. The method according to claim 6, wherein the controlling a state of the SCG based on a target timer comprises:
suspending the SCG in a case that the target timer does not expire; and
deactivating the SCG or releasing the SCG in a case that the target timer expires.

8. The method according to any one of claims 1 to 7, wherein the SCG suspend comprises at least one of the following:
disabling the SCG;
suspending a dual connectivity capability;
disabling a dual connectivity capability;
suspending an SCG resource;
disabling an SCG resource;
deactivating an SCG connection; and
releasing an SCG connection.

9. The method according to claim 1, wherein
in a case that the second indication information is transmitted through terminal auxiliary information, the terminal auxiliary information further comprises SCG resume preference and/or SCG addition preference; and
in a case that the second indication information is transmitted through a return message, the return message further comprises an SCG return notification.

10. The method according to claim 1, wherein the sending second indication information comprises:
sending a reconfiguration complete message in a case that reconfiguration information sent by the network-side device is received, wherein the reconfiguration complete message carries the second indication information.

11. The method according to claim 1, wherein after the sending second indication information, the method further comprises any one of the following:
receiving an SCG resume indication sent by the network-side device, wherein the SCG resume indication is used for indicating the terminal to perform SCG resume; and
in a case that a received network response message comprises reconfiguration information, performing a reconfiguration operation according to the reconfiguration information.

12. The method according to any one of claims 1, 2, and 9 to 11, wherein the SCG resume comprises at least one of the following:
enabling the SCG resume;
resuming a dual connectivity capability;
enabling a dual connectivity capability;
resuming an SCG resource;
enabling an SCG resource;
activating an SCG connection; and
resuming an SCG connection.

13. A method for controlling a secondary cell group, performed by a network-side device, and the method comprising:
receiving first indication information, and/or receiving second indication information; wherein
the first indication information is used for indicating SCG suspend to the network-side device, and the second indication information is used for indicating SCG resume to the network-side device.

14. The method according to claim 13, wherein in a case that the network-side device comprises a master node MN and a secondary node SN,
the receiving first indication information comprises: receiving, by the MN, the first indication information, or receiving, by the SN, the first indication information; and
the receiving second indication information comprises: receiving, by the MN, the second indication information, or receiving, by the SN, the second indication information.

15. The method according to claim 14, further comprising:
in a case that the MN receives the first indication information or the second indication information,
indicating, by the MN, the SN to perform the SCG suspend according to the first indication information; or
indicating, by the MN, the SN to perform the SCG resume according to the second indication information.

16. The method according to claim 14, further comprising:
in a case that the SN receives the first indication information or the second indication information,
performing, by the SN, the SCG suspend according to the first indication information, and sending an SCG suspend notification to the MN; or
performing, by the SN, the SCG resume according to the second indication information, and sending an SCG resume notification to the MN.

17. The method according to claim 13, wherein the first indication information carries SCG suspend reason information, and the SCG suspend reason information comprises at least one of the following:
a multi-SIM purpose;
performing a first specified service, wherein the first specified service is sensitive to a latency;
a non-3GPP purposes;
performing a specified signaling process; and
performing a second specified service.

18. The method according to any one of claims 13 to 17, wherein
in a case that the first indication information is transmitted through terminal auxiliary information, the terminal auxiliary information further comprises SCG suspend preference and/or SCG release preference; and
in a case that the first indication information is transmitted through a leaving message, the leaving message further comprises an SCG leaving notification and/or an SCG release notification.

19. The method according to any one of claims 13 to 17, wherein
in a case that the second indication information is transmitted through terminal auxiliary information, the terminal auxiliary information further comprises SCG resume preference and/or SCG addition preference; and
in a case that the second indication information is transmitted through a return message, the return message further comprises an SCG return notification.

20. The method according to any one of claims 13 to 17, wherein the SCG suspend comprises at least one of the following:
disabling the SCG;
suspending a dual connectivity capability;
disabling a dual connectivity capability;
suspending an SCG resource;
disabling an SCG resource;
deactivating an SCG connection; and
releasing an SCG connection.

21. The method according to any one of claims 13 to 17, wherein the SCG resume comprises at least one of the following:
enabling the SCG resume;
resuming a dual connectivity capability;
enabling a dual connectivity capability;
resuming an SCG resource;
enabling an SCG resource;
activating an SCG connection; and
resuming an SCG connection.

22. The method according to any one of claims 13 to 17, wherein after the receiving first indication information, the method further comprises at least one of the following:
sending information through an SCG connection unsuccessfully;
reserving some or all of allocated SCG resources;
reserving terminal context information;
performing an SCG-related process through the SCG, wherein the SCG-related process comprises at least one of SCG establishment, SCG release, and SCG reconfiguration;
resuming the SCG to a normal transmission state unsuccessfully; and
sending a network response message, wherein the network response message corresponds to the first indication information.

23. The method according to claim 22, wherein the network response message comprises at least one of the following:
an SCG suspend message;
an SCG release message;
a timing configuration message, wherein the timing configuration message is used for indicating the terminal to control a state of the SCG based on a target timer; and
reconfiguration information, wherein the reconfiguration information comprises information used for indicating the terminal to reconfigure a bearer or SCG reconfiguration information.

24. The method according to claim 23, wherein the receiving second indication information comprises:
receiving a reconfiguration complete message in a case that the network response message comprises the reconfiguration information, wherein the second indication information is carried in the reconfiguration complete message.

25. The method according to claim 23, wherein the controlling a state of the SCG based on a target timer comprises:
suspending the SCG in a case that the target timer does not expire; and
deactivating the SCG or releasing the SCG in a case that the target timer expires.

26. An apparatus for controlling a secondary cell group, comprising:
a sending module, configured to send first indication information, and/or send second indication information; wherein
the first indication information is used for indicating SCG suspend to a network-side device, and the second indication information is used for indicating SCG resume to the network-side device.

27. The apparatus according to claim 26, wherein in a case that the network-side device comprises a master node MN and a secondary node SN, the sending module sends the first indication information, comprising any one of the following:
sending the first indication information to the MN; and
sending the first indication information to the SN; and
the sending module sends the second indication information, comprising any one of the following:
sending the second indication information to the MN; and
sending the second indication information to the SN.

28. The apparatus according to claim 26, wherein the first indication information carries SCG suspend reason information, and the SCG suspend reason information comprises at least one of the following:
a multi-SIM purpose;
performing a first specified service, wherein the first specified service is sensitive to a latency;
a non-3GPP purposes;
performing a specified signaling process; and
performing a second specified service.

29. The apparatus according to claim 26, wherein
in a case that the first indication information is transmitted through terminal auxiliary information, the terminal auxiliary information further comprises SCG suspend preference and/or SCG release preference; and
in a case that the first indication information is transmitted through a leaving message, the leaving message further comprises an SCG leaving notification and/or an SCG release notification.

30. The apparatus according to claim 26, wherein the apparatus further comprises a first operation module, and the first operation module is configured to perform any one of the following:
locally suspending the SCG;
locally releasing the SCG; and
waiting to receive a network response message, wherein the network response message corresponds to the first indication information.

31. The apparatus according to claim 30, wherein the network response message comprises at least one of the following:
an SCG suspend message;
an SCG release message;
a timing configuration message, wherein the timing configuration message is used for indicating the terminal to control a state of the SCG based on a target timer; and
reconfiguration information, wherein the reconfiguration information comprises information used for indicating the terminal to reconfigure a bearer or SCG reconfiguration information.

32. The apparatus according to claim 31, wherein the controlling a state of the SCG based on a target timer comprises:
suspending the SCG in a case that the target timer does not expire; and
deactivating the SCG or releasing the SCG in a case that the target timer expires.

33. The apparatus according to any one of claims 26 to 32, wherein the SCG suspend comprises at least one of the following:
disabling the SCG;
suspending a dual connectivity capability;
disabling a dual connectivity capability;
suspending an SCG resource;
disabling an SCG resource;
deactivating an SCG connection; and
releasing an SCG connection.

34. The apparatus according to claim 26, wherein
in a case that the second indication information is transmitted through terminal auxiliary information, the terminal auxiliary information further comprises SCG resume preference and/or SCG addition preference; and
in a case that the second indication information is transmitted through a return message, the return message further comprises an SCG return notification.

35. The apparatus according to claim 26, wherein the sending module is configured to send a reconfiguration complete message in a case that reconfiguration information sent by the network-side device is received, wherein the reconfiguration complete message carries the second indication information.

36. The apparatus according to claim 26, further comprising:
a first receiving module, configured to receive an SCG resume indication sent by the network-side device, wherein the SCG resume indication is used for indicating the terminal to perform SCG resume; and/or
a reconfiguration module, configured to perform, in a case that a received network response message comprises reconfiguration information, a reconfiguration operation according to the reconfiguration information.

37. The apparatus according to any one of claims 26, 27, and 34 to 36, wherein the SCG resume comprises at least one of the following:
enabling the SCG resume;
resuming a dual connectivity capability;
enabling a dual connectivity capability;
resuming an SCG resource;
enabling an SCG resource;
activating an SCG connection; and
resuming an SCG connection.

38. An apparatus for controlling a secondary cell group, comprising
a second receiving module, configured to receive first indication information, and/or receive second indication information; wherein
the first indication information is used for indicating SCG suspend to a network-side device, and the second indication information is used for indicating SCG resume to the network-side device.

39. The apparatus according to claim 38, wherein in a case that the network-side device comprises a master node MN and a secondary node SN, the second receiving module receiving first indication information comprises: receiving, by the MN, the first indication information, or receiving, by the SN, the first indication information; and
the second receiving module receiving second indication information comprises: receiving, by the MN, the second indication information, or receiving, by the SN, the second indication information.

40. The apparatus according to claim 38, further comprising:
in a case that the MN receives the first indication information or the second indication information, indicating, by the MN, the SN to perform the SCG suspend according to the first indication information, or indicating, by the MN, the SN to perform the SCG resume according to the second indication information.

41. The apparatus according to claim 38, further comprising:
a second operation module, configured to, in a case that the SN receives the first indication information or the second indication information, perform the SCG suspend according to the first indication information, and send an SCG suspend notification to the MN; or perform the SCG resume according to the second indication information, and send an SCG resume notification to the MN.

42. The apparatus according to claim 38, wherein the first indication information carries SCG suspend reason information, and the SCG suspend reason information comprises at least one of the following:
a multi-SIM purpose;
performing a first specified service, wherein the first specified service is sensitive to a latency;
a non-3GPP purposes;
performing a specified signaling process; and
performing a second specified service.

43. The apparatus according to any one of claims 38 to 42, wherein
in a case that the first indication information is transmitted through terminal auxiliary information, the terminal auxiliary information further comprises SCG suspend preference and/or SCG release preference; and
in a case that the first indication information is transmitted through a leaving message, the leaving message further comprises an SCG leaving notification and/or an SCG release notification.

44. The apparatus according to any one of claims 38 to 42, wherein
in a case that the second indication information is transmitted through terminal auxiliary information, the terminal auxiliary information further comprises SCG resume preference and/or SCG addition preference; and
in a case that the second indication information is transmitted through a return message, the return message further comprises an SCG return notification.

45. The apparatus according to any one of claims 38 to 42, wherein the SCG suspend comprises at least one of the following:
disabling the SCG;
suspending a dual connectivity capability;
disabling a dual connectivity capability;
suspending an SCG resource;
disabling an SCG resource;
deactivating an SCG connection; and
releasing an SCG connection.

46. The apparatus according to any one of claims 38 to 42, wherein the SCG resume comprises at least one of the following:
enabling the SCG resume;
resuming a dual connectivity capability;
enabling a dual connectivity capability;
resuming an SCG resource;
enabling an SCG resource;
activating an SCG connection; and
resuming an SCG connection.

47. The apparatus according to any one of claims 38 to 42, wherein the apparatus further comprises a third operation module, configured to perform at least one of the following:
sending information through an SCG connection unsuccessfully;
reserving some or all of allocated SCG resources;
reserving terminal context information;
performing an SCG-related process through the SCG, wherein the SCG-related process comprises at least one of SCG establishment, SCG release, and SCG reconfiguration;
resuming the SCG to a normal transmission state unsuccessfully; and
sending a network response message, wherein the network response message corresponds to the first indication information.

48. The apparatus according to claim 47, wherein the network response message comprises at least one of the following:
an SCG suspend message;
an SCG release message;
a timing configuration message, wherein the timing configuration message is used for indicating the terminal to control a state of the SCG based on a target timer; and
reconfiguration information, wherein the reconfiguration information comprises information used for indicating the terminal to reconfigure a bearer or SCG reconfiguration information.

49. The apparatus according to claim 48, wherein the second receiving module is configured to receive a reconfiguration complete message in a case that the network response message comprises the reconfiguration information, wherein the second indication information is carried in the reconfiguration complete message.

50. The apparatus according to claim 48, wherein the controlling a state of the SCG based on a target timer comprises:
suspending the SCG in a case that the target timer does not expire; and
deactivating the SCG or releasing the SCG in a case that the target timer expires.

51. A terminal, comprising a processor, a memory, and a program or an instruction stored in the memory and executable on the processor, wherein when the program or instruction is executed by the processor, steps of the method for controlling a secondary cell group according to any one of claims 1 to 12 are implemented.

52. A network-side device, comprising a processor, a memory, and a program or an instruction stored in the memory and executable on the processor, wherein when the program or instruction is executed by the processor, steps of the method for controlling a secondary cell group according to any one of claims 13 to 25 are implemented.

53. A readable storage medium, storing a program or an instruction, wherein when the program or instruction is executed by a processor, steps of the method for controlling a secondary cell group according to any one of claims 1 to 12 are implemented, or steps of the method for controlling a secondary cell group according to any one of claims 13 to 25 are implemented.

54. A chip, comprising a processor and a communication interface, wherein the communication interface is coupled to the processor, and the processor is configured to execute a program or an instruction to implement steps of the method for controlling a secondary cell group according to any one of claims 1 to 12 or steps of the method for controlling a secondary cell group according to any one of claims 13 to 25.

55. A computer program product, comprising a processor, a memory, and a program or an instruction stored in the memory and executable on the processor, wherein when the program or instruction is executed by the processor, steps of the method for controlling a secondary cell group according to any one of claims 1 to 12 are implemented, or steps of the method for controlling a secondary cell group according to any one of claims 13 to 25 are implemented.
